# EUROPÄISCHE PATENTSCHRIFT

(11) **EP 2 807 039 B1**
(45) Veröffentlichungstag und Bekanntmachung des Hinweises auf die Patenterteilung: **14.03.2018**
(21) Anmeldenummer: 13700023.8
(22) Anmeldetag: 03.01.2013
(51) Int. Cl.: B44C 1/24, B44C 5/04, B44F 9/00

(54) **VERFAHREN ZUM HERSTELLEN EINER KUNSTSTOFFFOLIE MIT GEFÄRBTER UND GEPRÄGTER OBERFLÄCHE**
METHOD FOR PRODUCING A PLASTIC FILM HAVING A COLOURED AND EMBOSSED SURFACE
PROCÉDÉ DE FABRICATION D'UNE FEUILLE EN MATIÈRE PLASTIQUE AYANT UNE SURFACE COLORÉE ET ESTAMPÉE

(30) Priorität: 23.01.2012 DE 102012100534
(43) Veröffentlichungstag der Anmeldung: 03.12.2014
(73) Patentinhaber: Benecke-Kaliko AG, 30419 Hannover (DE)
(72) Erfinder: WOLFF, Roland, 30926 Seelze (DE); IBEN, Dirk, 23611 Sereetz (DE); STAHLHUT, Oliver, 30900 Wedemark (DE); MAEKER, Michael, 30449 Hannover (DE)
(74) Vertreter: Kilsch, Armin Ralph
(86) Internationale Anmeldenummer: PCT/EP2013/050032
(87) Internationale Veröffentlichungsnummer: WO 2013/110478

(56) Entgegenhaltungen:
- WO-A1-03/010007
- DE-A1- 4 324 970
- DE-A1-102005 046 264
- US-A- 2 035 760
- US-A- 4 116 737
- US-A1- 2003 218 663

## Beschreibung

Die Erfindung betrifft ein Verfahren zum Herstellen einer Kunststoff-Folie mit einer dreidimensional strukturierten und gefärbten Oberfläche, insbesondere einer Folie zur Verwendung für die Innenverkleidung von Fahrzeugen, hier z.B. für Armaturenbretter und Türinnenverkleidungen von Kraftfahrzeugen oder für Wand-, Decken- und Bodenverkleidungen von Luft- oder Wasserfahrzeugen, oder auch einer Folie für Möbeloberflächen oder andere Gebrauchsgegenstände.

Solche Herstellverfahren für Kunststoff-Folien sind bekannt. So offenbart die DE 43 24 970 A1 ein Verfahren zur Herstellung von dreidimensional strukturierten Oberflächen mit Hilfe einer Prägewalze, wobei die Oberfläche der Prägewalze die Negativform der zu prägenden Oberfläche darstellt. Benutzt wird diese Technik für die Herstellung von thermoplastischen Folien als Ersatz für natürliche und in ihrer Struktur hoch komplexe Oberflächen, wie z.B. feinporiges und mit einer ausgeprägten Narbstruktur versehenes Rindsleder, Büffelleder, etc. Hierbei wird mit Hilfe einer Lasergravur die Oberfläche einer Positivform bearbeitet, wobei der Laser(-strahl) dabei durch Daten gesteuert wird, die vorher mit Hilfe einer optischen oder mechanischen Abtastung der Originaloberfläche erhalten wurden. Ein solches Verfahren kann man einerseits dazu nutzen, um eine Prägewalze direkt und ohne das Erfordernis weiterer Zwischenschritte herzustellen. Andererseits läßt ein solches Verfahren auch eine Herstellung von Zwischenformen oder Zwischenwalzen zu, die entsprechend das Positiv oder das Negativ der Oberflächenstruktur der Originaloberfläche enthalten.

Die DE 43 26 874 A1 offenbart ein Verfahren zur Gravur eines Musters in die Oberfläche eines Werkstücks, bei der ebenfalls mit Hilfe einer optischen oder mechanischen Abtastung einer Oberfläche einer Mustervorlage eine Oberflächeninformation in Form von elektrischen Steuersignalen erzeugt und gespeichert wird, die dann zur Steuerung des Gravurlasers genutzt wird. Hierbei wird im Bereich der Übergänge oder Stöße die dort von der Mustervorlage gewonnene Oberflächeninformation als gleiches Muster mehrfach hintereinander auf das Werkstück graviert. Auch ist offenbart, die gleiche Oberflächeninformation mehrfach und/oder abwechselnd in umgekehrte Informationsfolge - also vorwärts und rückwärts - zu gravieren, also auch mit einer gewissen Zufälligkeit aufzubringen. Durch solche Verfahren werden die Übergänge etwas weicher, bleiben aber nach wie vor sichtbar.

Diese Verfahren im Stand der Technik sind geeignet für die bisher übliche Herstellung von mehr oder weniger einfarbigen Folien, mit Ausnahme von einer etwa leicht "wolkigen" Farbgebung oder großflächigen Farbänderung, wie sie zwischen unterschiedlichen Funktionsbereichen bei solchen Folien besteht, z. B. bei Armaturenbrettfolien zwischen dem Bereich nahe oder unter der Frontscheibe, der möglichst reflexarm und farbstumpf ausgebildet werden soll, und dem Bereich im Fußraum, der möglichst wohnlich und farbglänzend erscheinen soll.

Solche Farbänderungen werden heute durch z. B. Tiefdruckverfahren hergestellt, bei dem die mit einer Oberflächenstruktur bzw. einer Prägung versehene Folie mit Hilfe von Farbdruckwalzen in einem Farbdruckwerk gefärbt wird. Solche Verfahren sind teuer und unflexibel, da sich mit einer Walze immer nur derselben Farbübergang herstellen lässt. Zusätzlich ist das Druckbild nicht ohne größeren Aufwand in geeigneter Qualität reproduzierbar.

Beim Arbeiten mit einem klassischen Druckwerk ist eine reproduzierbare Gleichmäßigkeit sehr schwierig darstellbar, da üblicherweise die Druckeinstellung (Zustellung der Walzen) indirekt über die Einstellung des Druckspaltes erfolgt. Schwankt die Dicke des Materials, so werden abhängig vom Druck bzw. der Druckverteilung mehr oder weniger der Struktur mit Farbe versehen, somit variiert das Druckbild und damit der Farbauftrag und die Farbverteilung.

Folien mit Farbübergängen werden heute in Serie für verschiedene Fahrzeuge gefertigt. Manche Farbtrennlinien, die recht markant ausgeführt und werden, müssen aufgrund des genannten nicht zufrieden stellenden Druckbildes sogar hinter einer Verblendung verborgen werden, die die beiden Farbbereiche trennt.

Alle bekannten Verfahren weisen Nachteile in der Form auf, dass entweder Farbgrenzen nicht genau hergestellt werden können oder dass "fließende" Farbübergänge von einer Farbe zur anderen einen erheblichen Aufwand für einen mehrfachen Walzendruck erfordern und zudem ein Druckbild erzeugen, welches während der Herstellung Schwankungen aufweisen kann. Der Betrachter hat darüberhinaus oft die Empfindung, dass Struktur der geprägten dreidimensionalen Oberfläche solcher Folien und die Farbgebung nicht "zusammenpassen" und sieht und fühlt z.B. sofort, dass Kunstleder längst nicht den optischen und haptischen Eindruck erreicht wie das Original.

Nach wie vor ist die subjektive Bewertung durch das menschliche Auge ist eine äußerst präzise und bisher durch automatische Verfahren nicht zu ersetzende Art der Beurteilung einer strukturierten Oberfläche, die selbst kleinste Veränderungen im Erscheinungs- und Farbbild der Oberfläche deutlich registriert. Übergänge oder Grenzbereiche, Rapportbildung und Moulettenstreifen, fallen ebenso deutlich auf wie "unnatürlich" wirkende Farbgebungen. Darüber hinaus existiert das Phänomen, dass das menschliche Auge eine mit größerem Abstand betrachtete Oberfläche ganz anders beurteilt als bei einer Betrachtung in geringem Abstand. So kann es sein, dass etwa eine im Detail und aus geringem Abstand betrachtete Kunstlederoberfläche ebenmäßig erscheint, während dieselbe Kunstlederoberfläche bei einer Betrachtung aus mehreren Metern Entfernung als unruhig, streifig und farblich unnatürlich empfunden wird.

Die US 2003/0218663 A1 offenbart ein Verfahren und eine Vorrichtung zum Bedrucken eines Artikels, wie zum Beispiel einer mit Kassetten und Vertiefungen versehenen Türverkleidung, bei der das Druckverfahren abhängig von den in oder auf dem zu bedruckenden Körper vorhandenen Vertiefungen, Kanälen oder sonstigen makroskopischen Formveränderungen gesteuert wird. Die Druckapparatur befindet sich bei diesem Verfahren in einer festen Höhe oberhalb des zu bedrucken Körpers und die Steuerung erfolgt so, dass die Menge der Tintentropfen, die durch den Drucker auf die Oberfläche gesprüht werden, oder deren Farbe abhängig von den Vertiefungen bzw. vom Abstand der Oberfläche vom Drucker verändert wird.

Für die Erfindung bestand also die Aufgabe, diese Nachteile zu vermeiden und ein Verfahren anzugeben, mit dem eine farbige Kunststoff-Folie mit einer dreidimensionalen Oberflächenstruktur herstellbar ist, wobei die Folie farblich beliebig mit exakten Farbgrenzen oder definierten Übergangsbereichen oder Zweifarbsystemen hergestellt werden kann, bei der Oberflächenstruktur und Farbgestaltung eine dem Original identische Anmutung aufweisen und keinerlei Rapporte, Stoßstellen oder Moulettenstreifen merkbar sind und ein fehlerfreies Druckbild erreicht wird.

Gelöst wird diese Aufgabe durch die Merkmale des Hauptanspruchs. Weitere vorteilhafte Ausbildungen sind in den Unteransprüchen offenbart.

Hierbei wird die Folie zunächst durch formgebende Verfahren mit einer dreidimensionalen Oberflächenstruktur versehen. Danach wird die durch das formgebende Verfahren entstandene Topologie der Folienoberfläche mit Hilfe eines z. B. lasergesteuerten Abtastverfahrens ermittelt, wobei die zugehörigen topologischen Daten gespeichert werden. Anschließend wird die Oberfläche mit einem Farbauftrag versehen, wobei eine die Oberfläche einfärbende Einrichtung, z. B. eine Lackiereinrichtung oder Farbauftragseinrichtung so gesteuert wird, dass die Einfärbung der Oberfläche abhängig von den topologischen Daten und den makroskopischen Formen der Oberfläche veränderbar ist, also etwa auch von den später nach dem Aufbringen der Folie auf einen Träger vorhandenen Biegungen im Armaturenbrett oder Vorsprüngen einer zweifarbigen Türverkleidung. Dadurch erhält die Folie die Folie farblich exakt definierte Übergangs- oder Grenzbereiche, wobei übereinstimmende Oberflächenstruktur und Farbgestaltung dem Betrachter eine fehlerfreie Ausbildung vermitteln. Wesentlich ist hierbei, dass Farbgebung und Prägung aufeinander abgestimmt sind und dass der Farbauftrag nicht durch Verfahren (Walzen) erfolgt, die ohne Rückkopplung zur tatsächlich vor dem Farbauftrag vorhanden Oberflächenstruktur arbeiten.

Dabei sind die Farbintensität und/oder die Farbe als solche oder deren Mischung abhängig von den topologischen Daten der Oberfläche veränderbar. Insbesondere im Zusammenwirken mit einer Ausbildung, bei der die die Oberfläche einfärbende Einrichtung so gesteuert wird, dass ein an seinen Grenzbereichen ineinander übergehendes Zweifarbensystem aufgebracht wird, lässt sich besonders gut ein so genannter "Gradientendruck" erzeugen, bei dem man das Durchlaufen des Farbübergangs zwischen zwei unterschiedlich eingefärbten Flächen sehr flexibel positionieren kann.

Eine einfache und mit herkömmlicher Walzentechnik durchzuführende Ausbildung des formgebenden Verfahrens für die dreidimensionale Oberflächenstruktur besteht darin, dass die Folie erfindungsgemäß mit Hilfe einer Prägewalze mit einer geprägten dreidimensionalen Oberflächenstruktur versehen wird.

Eine weitere vorteilhafte Ausbildung besteht darin, dass die Druckeinrichtung als Digitaldruckeinrichtung ausgebildet ist, insbesondere als Tintenstrahl-Drucker (Inkjet). Beim Digitaldruck ist man rapportunabhängig und kann beliebige Farbfelder mit beliebig verlaufenden Trennlinien darstellen. Ein Beispiel für den Einsatz solcher mehrfarbiger Folien ist die Verkleidung der Innenseite von Autotüren.

Durch den Einsatz der Digitaldrucktechnik lassen sich die farbigen Gestaltung der Folie mit völlig neuen Effekten durchführen und man kann die Farbe und Struktur im oben genannten Sinne so korrelieren, dass Struktur, z.B. also die topologische Eigenschaften in Form einer Prägung, und Druckbild deckungsgleich aufeinanderliegen. Damit wird der visuelle und haptische Eindruck in Übereinstimmung gebracht und eine Gesamt-Anmutung erreicht, wird wie bei der Originaloberfläche.

Dies gilt insbesondere in Kombination mit einer weiteren vorteilhaften Ausbildung, bei der die durch formgebende Verfahren aufgebrachte dreidimensionale Oberflächenstruktur eine identische Abformung natürlicher Oberflächen ist, z.B. Leder, Holz, Stein etc. und damit insbesondere bei der Herstellung von naturidentischen Kunstledern bis hin zu Bildern, bei denen die Struktur die räumliche Tiefe unterstreicht.

Eine weitere vorteilhafte Ausbildung besteht darin, dass die durch formgebende Verfahren aufgebrachte dreidimensionale Oberflächenstruktur in Form gleichförmiger Kuppen oder in der Regel abgerundeter Vorsprünge ausgebildet wird, die sich von der Oberfläche abheben. Wird dann die Oberfläche mit der erfindungsgemäßen und abhängig von der Oberflächenstruktur gesteuerten Farbauftragseinrichtung mit einem Farbauftrag versehen, so können die Kuppen oder Vorsprünge mit einer "Kappe" in einer anderen Farbe versehen werden, als die vorliegende Folienfarbe. Bei diesem so genannten "tip printing" handelt es sich also um eine Sonderform einer zweifarbigen Folie.

Beim Arbeiten mit einem klassischen Druckwerk wäre eine reproduzierbare Gleichmäßigkeit hier nur sehr schwierig darstellbar, da üblicherweise die Druckeinstellung (Walzenanstellung) indirekt über die Einstellung des Druckspaltes erfolgt. Schwankt die Dicke des Materials ändert sich sofort auch das Druckbild bzw. die Größe des aufgebrachten Kuppendruckes.

Kombiniert man nun aber erfindungsgemäß z. B. ein digital arbeitendes Drucksystem mit dem Verfahren und erfasst man die genarbte Struktur über einen Scanner vor dem Einlauf in dieses Drucksystem, so kann der Druckauftrag geregelt und immer in der gewünschten Größe und Position ausgeführt werden.

Wird die Größe der Struktur erfasst, kann auch bei variablen oder chaotisch ausgeführten Strukturelementen, wie sie auch z. B. auf einer Lederoberfläche auftreten, immer die gewünschte Kuppenlackierung aufgebracht werden. Für die Erfassung von Größe und Position der Kuppen oder Vorsprünge können Scanner eingesetzt werden, die z.B. als Laserscanner ausgeführt sind. Für die Auswahl des geeigneten Scanners sind die notwendige Auflösung und die Scanraten entscheidende Merkmale.

Eine weitere vorteilhafte Ausbildung besteht darin, dass die Steuerung der Einfärbung der Oberfläche abhängig von den abgetasteten topologischen Daten und den makroskopischen Formen der Oberfläche mit Hilfe von auf der Oberfläche vorgesehenen Referenzmarken erfolgt. Damit sichert man ein rapportgenaues Bedrucken einer Prägestruktur, wobei sich durch die Überlagerung von Prägestruktur und Druckbild sich besondere Effekte auf einer Folie realisieren lassen.

Z.B. kann durch dunkle Farben im Bereich tiefer Narbstellen und helleren Farben im Bereich von erhabenen Narbstellen, optisch eine Tiefenwirkung erhöht werden oder durch entsprechende Farbkombinationen besondere Wirkungen, wie Betonung von Narbmerkmalen, erzeugt werden.

Ebenso lassen sich besondere Narbstellen durch eine farbliche Betonung besonders herausheben. Diese Gestaltungsmöglichkeiten konnten mit analogen Techniken bisher nicht umgesetzt werden, da diese Art der Überlagerung von Druck- und Prägebild aufgrund von Wärmeausdehnung und Deformationen bei der Lacktrocknung und im Prägeprozess bei einer Folie nicht realisierbar war.

Mit der Digitaldrucktechnik ist dagegen rapportgenaue Farbgebung nun möglich. Wird die Narbstruktur vor der Druckeinheit, z.B. dem Inkjet Druckkopf, mit einem Scanner erfasst, kann das Druckbild rapportgenau auf die Prägestruktur aufgesetzt werden. Da es sich in diesem Fall um Narbbilder und Druckbilder handelt, kann man die Erfassung der Struktur auch über Referenzmarken, ähnlich den Rapportmarken beim Farbdruck, durchführen. Mit diesen Informationen lassen sich dann auch Kompressionen bzw. Dehnungen dieser Struktur auf das Druckbild übertragen, nämlich im Sinne einer weiteren vorteilhaften Ausbildung der Erfindung, die darin besteht, dass die Einfärbung der Oberfläche so ausgeführt wird, dass nachfolgende Stauchungen oder Dehnungen der Folie optisch kompensiert werden.

Besonders geeignet ist eine solche Folie für die Verkleidung von Teilen, die besonders stark umgeformt und angepasst werden müssen, also etwa für Innenverkleidungsteile für ein Fahrzeug.

Insgesamt ergeben sich bei Anwendung des erfindungsgemäßen Verfahrens Vorteile dadurch, dass der dreidimensionale Charakter der Folienoberfläche durch die passgenaue Überlagerung von Prägestruktur und Druckdekor erhöht und besonders hervorgehoben wird. Auch werden Bilder/Druckbilder durch die überlagerte Prägestruktur haptisch "erfassbar", wodurch der Gesamteindruck verstärkt wird.

Abschließend soll die Erfindung anhand einiger Skizzen/Darstellungen näher erläutert werden. Es zeigen
- Fig. 1: eine zweifarbige Autotür mit konturierter, geschwungener Farbtrennlinie
- Fig. 2: einen erfindungsgemäßen Druck eines Farbübergangs für eine Folie
- Fig. 3: eine Prinzipskizze des so genannten "tip printing"
- Fig. 4: Eine rapportgenaue Überlagerung von Struktur und Druckbild nach dem erfindungsgemäßen Verfahren bei einer Holzdekor-Folie

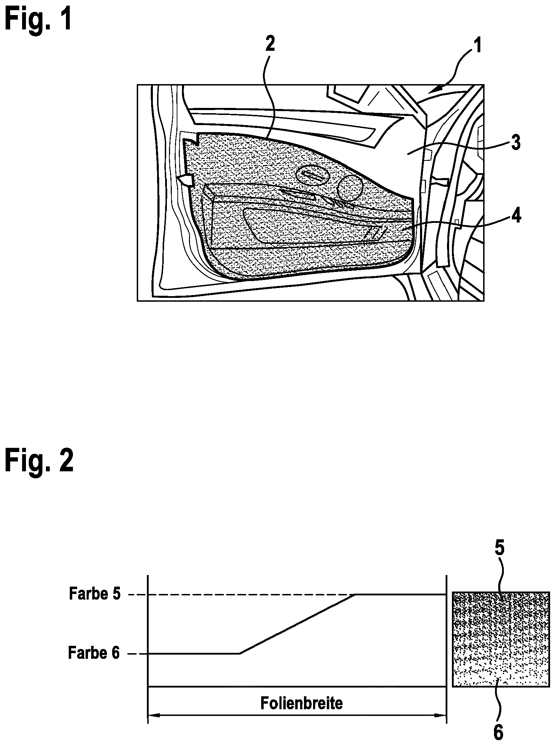

Die Fig. 1 zeigt eine zweifarbige Autotür 1 mit konturierter, geschwungener Farbtrennlinie 2 (zweiteilige Türverkleidung), bei der die Farbgrenzen mit dem erfindungsgemäßen Verfahren so hervorragend ausgeführt sind, dass auf eine Verblendung, die die beiden Farbbereiche 3 und 4 voneinander trennt, verzichtet werden kann.

Fig. 2 zeigt prinzipiell und anhand eines Farbbeispiels einen erfindungsgemäßen Gradientendruck für eine Folie mit weichem Übergang von einer Farbe 5 zur anderen Farbe 6.

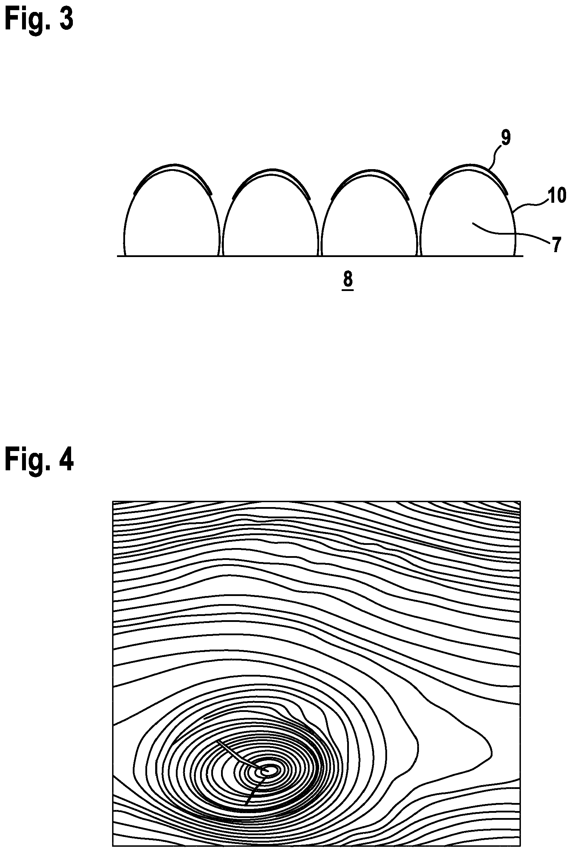

Fig. 3 zeigt eine Prinzipskizze des so genannten "tip printing", bei dem die durch formgebende Verfahren aufgebrachte dreidimensionale Oberflächenstruktur in Form gleichförmiger Kuppen 7 oder in der Regel abgerundeter Vorsprünge ausgebildet wird, die sich von der Oberfläche der Folie 8 abheben. Die Kuppen oder Vorsprünge 7 sind mit einer Farbe 9 als Kappe versehen, die sich von der vorliegende Grundfarbe 10 der Folie unterscheidet.

Fig. 4 zeigt noch einmal die rapportgenaue Überlagerung von Struktur und Druckbild nach dem erfindungsgemäßen Verfahren bei einer Holzdekor-Folie aus Kunststoff.

### Bezugszeichenliste

### (Teil der Beschreibung)

- 1: Autotür
- 2: Farbtrennlinie
- 3: Farbe
- 4: Farbe
- 5: Farbe
- 6: Farbe
- 7: Kuppe
- 8: Folie
- 9: Farbe
- 10: Grundfarbe

## Patentansprüche

1. Verfahren zum Herstellen einer mit einer geprägten dreidimensionalen Oberflächenstruktur versehenen Kunststoff-Folie mit einer gefärbten Oberfläche, wobei
- die Folie zunächst durch formgebende Verfahren mit Hilfe einer Prägewalze mit der dreidimensionalen Oberflächenstruktur versehen wird,
- danach die entstandene Topologie der Folienoberfläche mit Hilfe eines Abtastverfahrens ermittelt wird, und
- anschließend die Oberfläche mit einem Farbauftrag (3-6, 9) versehen wird, wobei eine die Oberfläche einfärbende Einrichtung so gesteuert wird, dass die Einfärbung der Oberfläche abhängig von den topologischen Daten und von den später nach dem Aufbringen der Folie auf einen Träger vorhandenden makroskopischen Formen der Oberfläche veränderbar ist, wobei bei der Einfärbung der Oberfläche die Farbintensität und/oder die Farbe (3-6, 9) als solche oder deren Mischung abhängig von den topologischen Daten der Oberfläche veränderbar sind.

2. Verfahren nach Anspruch 1, bei dem die die Oberfläche einfärbende Einrichtung als Digitaldruckeinrichtung ausgebildet ist, insbesondere als Tintenstrahl-Drucker.

3. Verfahren nach Anspruch 1 oder 2, bei dem die die Oberfläche einfärbende Einrichtung so gesteuert wird, dass ein an seinen Grenzbereichen ineinander übergehendes Zweifarbensystem aufgebracht wird.

4. Verfahren nach einem der Ansprüche 1 bis 3, bei dem die durch formgebende Verfahren aufgebrachte dreidimensionale Oberflächenstruktur in Form gleichförmiger Kuppen (7) oder Vorsprünge ausgebildet wird, die sich von der Oberfläche der Folie (8) abheben.

5. Verfahren nach einem der Ansprüche 1 bis 4, bei dem die durch formgebende Verfahren aufgebrachte dreidimensionale Oberflächenstruktur eine identische Abformung natürlicher Oberflächen ist.

6. Verfahren nach einem der Ansprüche 1 bis 5, bei dem die Steuerung der Einfärbung der Oberfläche abhängig von den abgetasteten topologischen Daten und den makroskopischen Formen der Oberfläche mit Hilfe von auf der Oberfläche vorgesehenen Referenzmarken erfolgt.

7. Verfahren nach einem der Ansprüche 1 bis 6, bei dem die Einfärbung der Oberfläche so ausgeführt wird, dass nachfolgende Stauchungen oder Dehnungen der Folie optisch kompensiert werden.

## Claims

1. Method for producing a plastic film provided with an embossed three-dimensional surface structure and having a coloured surface, wherein
- the film is first of all provided with the three-dimensional surface structure by way of shaping methods with the aid of an embossing roll,
- afterward, the topology which is produced of the film surface is determined with the aid of a scanning method, and
- subsequently, the surface is provided with a colour application (3-6, 9), a device which colours the surface being controlled in such a way that the colouring of the surface can be changed depending on the topological data and on the macroscopic shapes, present later after the application of the film to a carrier, of the surface,
wherein, during the colouring of the surface, the colour intensity and/or the colour (3-6, 9) per se or the mixture thereof can be changed depending on the topological data of the surface.

2. Method according to Claim 1, in which the device which colours the surface is configured as a digital printing device, in particular as an inkjet printer.

3. Method according to Claim 1 or 2, in which the device which colours the surface is controlled in such a way that a two-colour system is applied which merges one into another at its boundary regions.

4. Method according to one of Claims 1 to 3, in which the three-dimensional surface structure which is applied by way of shaping methods is configured in the form of homogeneous domes (7) or projections which are raised up from the surface of the film (8).

5. Method according to one of Claims 1 to 4, in which the three-dimensional surface structure which is applied by way of shaping methods is an identical impression of natural surfaces.

6. Method according to one of Claims 1 to 5, in which the control of the colouring of the surface takes place depending on the scanned topological data and the macroscopic shapes of the surface with the aid of reference marks which are provided on the surface.

7. Method according to one of Claims 1 to 6, in which the colouring of the surface is carried out in such a way that following compressions or extensions of the film can be compensated for visually.

## Revendications

1. Procédé de fabrication d'une feuille en matière plastique pourvue d'une structure de surface tridimensionnelle estampée et ayant une surface colorée, dans lequel
- la feuille est tout d'abord pourvue d'une structure de surface tridimensionnelle par un procédé de façonnage à l'aide d'un cylindre d'estampage,
- la topologie ainsi produite de la surface de la feuille est ensuite obtenue à l'aide d'un procédé de balayage, et
- la surface est enfin pourvue d'un revêtement coloré (3-6, 9), dans lequel un moyen de coloration de surface est commandé de manière à ce que la coloration de la surface puisse être modifiée en fonction des données topologiques et des formes macroscopiques de la surface ultérieurement présentes après l'application de la feuille sur un support,
dans lequel, lors de la coloration de la surface, l'intensité de coloration et/ou la couleur (3-6, 9) en tant que telle ou un mélange de celles-ci peuvent être modifiées en fonction des données topologiques de la surface.

2. Procédé selon la revendication 1, dans lequel le moyen de coloration de surface est réalisé sous la forme d'un moyen d'impression numérique, en particulier sous la forme d'une imprimante à jet d'encre.

3. Procédé selon la revendication 1 ou 2, dans lequel le moyen de coloration de surface est commandé de manière à déposer un système à deux couleurs se fondant mutuellement dans sa zone limite.

4. Procédé selon l'une des revendications 1 à 3, dans lequel la structure de surface tridimensionnelle appliquée par le procédé de façonnage est réalisée sous la forme de crêtes (7) ou de protubérances de mêmes formes qui font saillie par rapport à la surface de la feuille (8).

5. Procédé selon l'une des revendications 1 à 4, dans lequel la structure de surface tridimensionnelle appliquée par le procédé de façonnage est un moulage identique de surfaces naturelles.

6. Procédé selon l'une des revendications 1 à 5, dans lequel la commande de la coloration de la surface est effectuée en fonction des données topologiques obtenues par balayage et des formes macroscopiques de la surface à l'aide de repères de référence prévus sur la surface.

7. Procédé selon l'une des revendications 1 à 6, dans lequel la coloration de la surface est réalisée de manière à compenser optiquement des retraits ou des dilatations ultérieures de la feuille.
